# EUROPEAN PATENT APPLICATION

(11) **EP 4 501 681 A1**
(43) Date of publication of application: **05.02.2025**
(21) Application number: 23189332.2
(22) Date of filing: 02.08.2023
(51) Int. Cl.: B60K 35/00

(54) **CONTEXT-CONTROLLED FLEXIBLE DISPLAY SHAPING**

(71) Applicant: Wuhan Lotus Cars Co., Ltd., Wuhan, Hubei (CN)
(72) Inventor: Prangenberg, André, 65239 Hochheim (DE); Pätzold, Anna, 55131 Mainz (DE)
(74) Representative: Fuchs Patentanwälte Partnerschaft mbB

(57) **Abstract**

A method (100; 400) of operating a flexible display system (210), in particular for use in a vehicle (200), comprises receiving (110; 410) a plurality of context data items, wherein each of at least a subgroup of the context data items is indicative of one or more of a plurality of context classes of the flexible display system (210), determining (120; 420), based at least partially on the plurality of context data items, a prevailing context class among the plurality of context classes, and determining (130; 430), based at least partially on the prevailing context class and the plurality of context data items, a prevailing user reactivity state to the prevailing context class. The method (100; 400) further comprises determining (140; 440), based on the prevailing context class and the prevailing user reactivity state, an associated position of at least one flexible display unit (230) of the flexible display system (210), and generating (150; 450), based on the determined associated position and for output towards the at least one flexible display unit (230), a control signal configured for controlling a variable position of the flexible display unit (230) in accordance with the determined associated position.

## Description

The present application relates to a method of operating a flexible display system, in particular for use in a vehicle. The present application further relates to a control unit for a flexible display system, a flexible display system and a vehicle.

### Background

Flexible displays are known. In some implementations, a flexible display system comprises a flexible display panel, in some implementations including a touch input functionality, and one or more actuators to automatically change a shape of the display panel.

For example, EP 3 939 819 A1 relates to a dynamically bendable automotive interior display system. The described display stack comprises a bendable cover substrate assembly which is disposed over the display and permits reversibly bending the display along a bend axis.

Furthermore, a use of flexible display systems in vehicles has been proposed. For example, DE 10 2019 208 604 B3 relates to a flexible, touch-sensitive display device for a vehicle. The described trapezoidal display panel can be reversibly rotated between a vertical and a horizontal orientation dependent on a drive mode of the vehicle, including a detected eye position of a user of the display device. When the display panel has the vertical orientation, a visible size of the display panel can be reduced by reversibly folding the display panel.

There is a need for improved operation of a flexible display system, in particular in a vehicle.

### Summary of the Invention

Accordingly, there is provided a method according to claim 1, a control unit for a flexible display system according to claim 13, a flexible display system according to claim 14, and a vehicle according to claim 15.

According to a first aspect, a method of operating a flexible display system, in particular for use in a vehicle, is provided. The method comprises receiving a plurality of context data items, wherein each of at least a subgroup of the plurality of context data items is indicative of one or more of a plurality of context classes associated with the flexible display system, and determining, based at least partially on the plurality of context data items, a prevailing context class among the plurality of context classes. The method further comprises determining, based at least partially on the prevailing context class and the plurality of context data items, a prevailing user reactivity state to the prevailing context class, determining, based on the prevailing context class and the prevailing user reactivity state, an associated position of at least one flexible display unit of the flexible display system, and generating, based on the determined associated position and for output towards the at least one flexible display unit, a control signal configured for controlling a variable position of the flexible display unit in accordance with the determined associated position.

By determining a prevailing context class based on received context data items, improved control of a variable position of a flexible display unit in accordance with a user's prevailing need and/or convenience in a given context is facilitated. This applies in particular to complex context situations, where received context data items, such as received environment sensor data in relation to any one of received vehicle state data, received user presence data, received media information data associated with a content selected for output via the flexible display unit, etc., may be indicative of diverse relevant contexts regarding a likelihood of a most needed and/or most convenient position of the flexible display unit.

Furthermore, by determining a prevailing user reactivity state to the prevailing context class, improved control of the variable position of the flexible display unit in accordance with a user's prevailing need and/or convenience in the given context and under a current user condition is further facilitated. This applies in particular where context data items may be indicative of diverse user reactivity states, such as a user's physical activity level in relation to any one of a user's cognitive activity level, fatigue, stress, etc., respectively indicated by user behavior sensor data contained in the context data items.

Moreover, a certain physical or cognitive activity level and/or a certain stress, etc., may be 'normal' to an individual user in a first prevailing context with respect to a likely reactivity, or interaction, of the user towards the flexible display unit. In this case, a `default' position of the flexible display unit may be most convenient. In contrast, the same physical or cognitive activity level and/or stress, etc., may indicate a specific need of the user in another prevailing context with respect to a likely reactivity or interaction of the user towards the flexible display unit. Accordingly, a different position of the flexible display unit would be most convenient in that case. Thus, determining to the prevailing context class the prevailing user reactivity state further facilitates improved adjustment of a position of the flexible display unit in a significant and at the same time efficient manner.

Determining the prevailing context class may comprise, for each of the plurality of context classes, weighing the plurality of context data items in accordance with a set of context class weighing factors associated with the respective context class and determining a context class score of the context class based on the weighed context data items. In this case, determining the prevailing context class may further comprise determining, among the plurality of context classes, a context class having the greatest context class score as being the prevailing context class.

By weighing the context data items with class-associated, such as class-specific, context class weighing factors, efficient processing even of large amounts of context data items is facilitated. In particular, a precise determination of a given context in real-time is facilitated in this manner, including disambiguation of ambivalent context data items and prioritizing among coexisting context classes. Advantageously, an amount of context data items, an amount of context classes considered, and the sets of context class weighing factors are chosen in accordance with an effective relevance of these objects for determining a user's prevailing need and/or convenience regarding a position of the flexible display unit.

The plurality of context data items may comprise one or more sensor data items, one or more system parameter data items, one or more media information data items and/or one or more user settings data items.

The plurality of context classes may include a plurality of drive modes, a plurality of occupancy modes, a plurality of weather modes, a plurality of time modes, a plurality of traffic modes and/or a plurality of driver assistance modes.

The plurality of context data items may comprise a first subgroup and a second subgroup of the plurality of context data items. In this context, determining the prevailing context class among the plurality of context classes may be performed using the first subgroup of the plurality of context data items. In addition, determining the prevailing user reactivity state may be performed using the second subgroup of the plurality of context data items. At least one context data item of the plurality of context data items contained in one of the first subgroup and the second subgroup may not be contained in the respective other of the first subgroup and the second subgroup.

Determining the prevailing user reactivity state to the prevailing context class may comprise, for each of a plurality of user reactivity states, weighing the plurality of context data items in accordance with a set of user reactivity state weighing factors associated with the respective user reactivity state and the prevailing context class and determining a user reactivity state score of the user reactivity state based on the weighed context data items, and determining, among the plurality of user reactivity states, a user reactivity state having the greatest user reactivity state score as being the prevailing user reactivity state to the prevailing context class.

For any of the plurality of context classes, the prevailing user reactivity state may be determined among a plurality of user reactivity states comprising at least one of distraction, disturbance, neediness and/or default.

A position of the flexible display unit associated with distraction and/or disturbance as the prevailing user reactivity state may correspond to an averted position of the flexible display unit with respect to a user. A position associated with neediness as the prevailing user reactivity state may correspond to a facing position of the flexible display unit with respect to a user. A position associated with default as the prevailing user reactivity state may correspond to an intermediate position between an averted and a facing position of the flexible display unit with respect to a user. Disturbance as the prevailing user reactivity state may be determined based at least partially on determining that the plurality of context data items indicate that a user is asleep.

The prevailing user reactivity state may be determined based at least partially on a content selected for output via the flexible display unit and/or a control input functionality selected for being provided at the flexible display unit and adapted for receiving user control input via the flexible display unit.

The variable position of the flexible display unit may comprise at least one of a variable orientation and a variable shape of a flexible display panel of the flexible display unit.

The method may be performed by means of a control unit of the flexible display system. In addition, the flexible display system may be configured to provide a graphical user interface of a vehicle system of a vehicle. In connection with this, the plurality of context data items may comprise one or more sensor data items received from one or more sensor devices of the vehicle system, one or more system parameter data items corresponding to one or more system parameters of the vehicle system, one or more media information data items received from a media system of the vehicle system and/or one or more user settings data items received from a user settings managing module of the vehicle system. In addition or as an alternative, the flexible display unit may be arranged to provide a graphical user interface for use by a driver and at least one passenger of the vehicle. In addition or as an alternative, the variable position of the flexible display unit may comprise a variable orientation and a variable shape of a flexible display panel of the flexible display unit, wherein the orientation and the shape of the flexible display panel are variable at least between a facing position of at least a portion of the flexible display panel with respect to a driver or a passenger of the vehicle and an averted position of at least the portion of the flexible display panel with respect to the driver or the passenger of the vehicle.

According to another aspect, a control unit for a flexible display system is described. The control unit comprises a processing unit and a storage device operatively connected to the processing unit and storing portions of program code which, when executed by means of the processing unit, cause the control unit to perform the method as presently described.

According to another aspect, a flexible display system, in particular for use in a vehicle, is described. The flexible display system comprises a control unit as presently described, and at least one flexible display unit, wherein a position of the flexible display unit is controllable by means of a control signal output by means of the control unit towards the flexible display unit.

According to another aspect, a vehicle is described. The vehicle comprises a flexible display system as presently described.

### Brief Description of the Figures

Further details, advantages and objectives of the invention become apparent from the drawings and the detailed description. There is shown in the drawings:
- Fig 1: a flow diagram of a method of operating a flexible display system according to an example;
- Fig. 2: a vehicle with a flexible display system according to an example;
- Fig. 3: a control unit for a flexible display system according to an example;
- Fig. 4: a flow diagram of a method of operating a flexible display system according to another example.

### Detailed Description

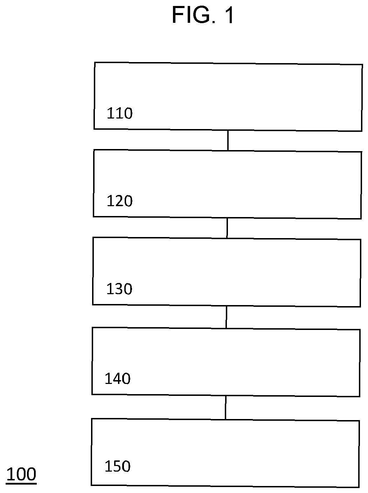

Fig. 1 shows schematically and exemplary a flow diagram of a method 100 of operating a flexible display system. For example, the method 100 is usable for operating a flexible display system of a vehicle.

The method 100 comprises receiving a plurality of context data items, step 110. Each of at least a subgroup of the context data items is indicative of one or more of a plurality of context classes of the flexible display system.

The method 100 further comprises determining a prevailing context class among the plurality of context classes, step 120. Determining the prevailing context class is performed based at least partially on the plurality of received context data items.

In another step, the method 100 comprises determining a prevailing user reactivity state to the prevailing context class, step 130. Determining the prevailing user reactivity state to the prevailing context class is performed based at least partially on the prevailing context class and the plurality of received context data items.

The method 100 further comprises determining an associated position of at least one flexible display unit of the flexible display system based on the prevailing context class and the prevailing user reactivity state, step 140.

When the associated position of the flexible display unit is determined, the method 100 further comprises generating a control signal configured for controlling a variable position of the flexible display unit in accordance with the determined associated position, step 150. The control signal is generated based on the determined associated position. Moreover, the control signal is generated for output towards the at least one flexible display unit.

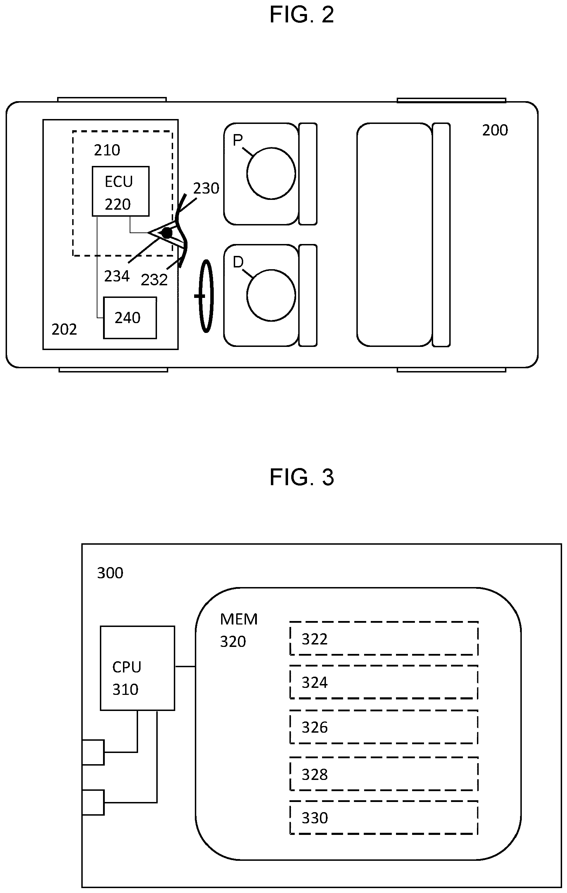

In the following, the operations according to the method 100 are described in more detail, in an example, in connection with a vehicle as shown in Fig. 2.

Fig. 2 shows schematically and exemplarily a vehicle 200. The vehicle 200 comprises a flexible display system 210. The flexible display system 210 has a control unit 220 and a flexible display unit 230 operatively connected to the control unit 220. The flexible display unit 230 comprises a flexible display panel 232 and an actuator 234 arranged to modify a position, for example, an orientation and a shape, of the flexible display panel 232, in accordance with a control signal received from the control unit 220.

The vehicle 200 further comprises a vehicle system 202 with at least one sensor device 240. In the shown example, the flexible display system 210 is part of the vehicle system 202. In addition, the control unit 220 of the flexible display system 210 is implemented by way of an electronic control unit of the vehicle system 202. In the example, the sensor device 240 is operatively connected to the electronic control unit of the vehicle system 202, in which the control unit 220 of the flexible display system 210 is implemented. In other examples, at least some components of the flexible display system 210 are implemented separate from, for example, operatively connected to, the vehicle system 202 of the vehicle 200.

Furthermore, in the example of Fig. 2, the flexible display system 210 and the vehicle system 202 are integrated within the vehicle 200. In other implementations, at least some components of the flexible display system 210 and/or of the vehicle system 202 are implemented separate from, for example, operatively connected via a communication network to, an on-board subsystem of the vehicle 200.

In the example of Fig. 2, the flexible display system 210 is arranged to be used by a driver D and a passenger P who are located in a front area of the vehicle 200. However, it will be appreciated that the techniques described herein are applicable to other arrangements of a flexible display system and/or with respect to other users, other contexts, etc.

The flexible display unit 230 is arranged to modify a position, for example an orientation and/or a shape, of the flexible display panel 232 in such manner that an ability to interact with the flexible display panel 230 is modified for at least one potential user of the flexible display unit 230, either in the vehicle 200 and/or in a vicinity of the vehicle 200. Interaction with the flexible display panel 230 comprises in some examples the perception of visual output displayed on the flexible display panel 230 and/or the provision of control input, for example, touch input, via the flexible display panel 230, at least in a region of the flexible display panel 230.

Modifying the ability to interact with the flexible display panel 230 includes in some examples changing an orientation of at least a region, for example a side portion, of the flexible display panel 230 with respect to at least one potential user of the flexible display panel 230. Moreover, in some examples, modifying the ability to interact with the flexible display panel 230 includes changing a distance of at least a region, for example a side portion, of the flexible display panel 230 from the at least one potential user.

In an example, the actuator 234 is adapted to reversibly bend the flexible display panel 230 from a planar position such that a side portion at the remote end of the flexible display panel 232 is bent towards the driver D. By bending the remote side portion towards the driver, a viewing angle of the driver D onto the side portion is increased. Accordingly, the visibility of visual content provided via the side portion is improved for the driver D. Furthermore, the distance between the driver D and the side portion is reduced in this way. This facilitates the provision of control input, for example, touch input, in the area of the remote side portion for the driver D.

In addition, referring to the same example, bending the remote side portion of the flexible display panel 230 towards the driver D reduces a viewing angle under which the remote side portion is viewed by the passenger P. Thus, bending the remote side portion of the flexible display panel 232 towards the driver D can be advantageous in various contexts. Such contexts include situations of increased traffic hazard, in which an improved operability of the touch functionality of the flexible display system 230 for the driver D is desirable. In these situations, improved operability for the driver D outweighs a comfort of the passenger P, who may be interested in viewing media content provided partially in a region of the remote side portion of the flexible display panel 232 and whose ability to view the media content will become impeded. In contrast, other contexts in which bending the remote side portion of the flexible display panel 232 towards the driver D is advantageous, even in normal traffic situations, include situations in which the passenger P may be asleep and in which a reduced output of light from the flexible display unit 230 towards the passenger P is suited to reduce disturbance of the passenger P.

Analogously to the aforesaid examples, various positions, especially various orientations and/or various shapes, of the flexible display system 230 are advantageous in different contexts of the flexible display system 230, for example, different traffic situations. Furthermore, various positions, especially various orientations and/or various shapes, of the flexible display system 230 can be advantageous in a given context, for example, in a given traffic situation, depending on a reactivity state of respective one or more users of the flexible display system 230.

As described herein, a position of a flexible display system 230 is advantageously controlled based on a prevailing, for example, a prioritized, context of the flexible display system 230, for example, a prevailing context of the vehicle 200 depending on a driving state of the vehicle 200. Furthermore, the position of the flexible display system 230 is advantageously controlled further based on a prevailing, for example, a prioritized, reactivity state of one or more respective users of the flexible display system 230 with respect to the prevailing context, for example, a reactivity state characterized by increased stress or neediness as opposed to a reactivity state characterized by sleep.

For determining a prevailing context, or a prevailing context class, any data items available to the control unit 220 are usable if such data items are indicative of one or more potential contexts or context classes. In some examples, a context class includes various contexts which, in combination with a same reactivity state, call for a same position, or a same position type, of the flexible display unit 230.

Likewise, for determining a prevailing reactivity state any data items available to the control unit 220 are usable if such data items are indicative of one or more potential reactivity states of one or more potential users, or potential interactors, of the flexible display system 230. In some examples, a reactivity state includes various potential conditions of the one or more users which, in a given context, call for a same position or a same position type of the flexible display unit 230.

In some implementations, the flexible display system 210 is adapted to receive data which is indicative of the context of the flexible display system 210, for example, a context of the vehicle 200. Relevant contexts with respect to an improved position of the flexible display unit 230 comprise, in some examples, a present driving state of the vehicle 200, a present occupancy of the vehicle 200, a present traffic situation of the vehicle 200, a present weather situation or any other environmental condition of the vehicle 200, a time of day, social interaction among persons inside the vehicle 200, media output in the vehicle 200, content and/or control functionalities selected for display on the flexible display panel 232, and the like. Data which is indicative of a context and which is receivable by means of the flexible display system 210 include, for example, sensor data acquired by means of at least one sensor device 240 or received by means of a communication unit of the vehicle system 202 from other sensor devices in the vicinity of the vehicle 200, media information data available at a media system of the vehicle system 202, control input information data obtained based on control input provided by a user of the vehicle 200 through a control interface of the vehicle system 202, geographic information data obtained by means of a geographic positioning system of the vehicle system 202, and the like.

In some examples the flexible display system 210 is configured to continuously receive context data items and to continuously analyze the received context data items with respect to a present context or a present context class of the flexible display system 210, especially a present context or a present context class of the vehicle 200. In other examples, the flexible display system 210 is configured to receive context data items and analyze such data at predetermined intervals. Based on the received context data items, the flexible display system 210 determines, by means of the control unit 220, a prevailing context class among a plurality of potential context classes.

When a prevailing context class has been determined, the control unit 220 also determines a prevailing user reactivity state to the prevailing context class. The prevailing user reactivity state is determined based on the plurality of context data items, wherein the prevailing context class is also considered. For determining the prevailing user reactivity state, such context data items are particularly suited which are most indicative of any sort of conditions which may affect the user's reactivity. Such data includes, for example, visual data from a driver camera indicating an activity level of the driver, types and frequency of control interactions with the vehicle system 202 provided by the driver, verbal or nonverbal acoustic expressions of the user as detected, for example, by means of a microphone among the at least one sensor device 240 of the vehicle system 202, and the like.

Considering the prevailing context class allows for an improved determining of the prevailing user reactivity state with respect to an optimal position of the at least one flexible display unit 230. For example, a low activity level of the driver, which may be detected by means of the flexible display system 210, corresponds to a normal reactivity when the vehicle 200 is standing or during extended driving on a straight road. In contrast, the same detected activity level may correspond to undesirable sleepiness of the driver when detected in a complex traffic situation. Likewise, an increased activity level of the driver may correspond to a normal reactivity, for example, corresponding to normal needs with regard to an interaction with the flexible display unit 230, when the prevailing context class indicates a complex traffic situation. In contrast, an increased activity level of the driver in connection with a normal traffic situation at a geographic location that is unfamiliar to the driver may be indicative of a need for increased assistance on the part of the driver, thus calling for a position of the flexible display unit 230 that facilitates interaction for the driver, for example, at the temporary expense of the comfort of other passengers in the vehicle 200.

Thus, different needs of a user and/or different demands to a user's reactivity may depend on a prevailing context. In addition, determining a prevailing context supports a context-based determining of a prevailing user reactivity state. This in turn enables adapting a position of the flexible display unit 230 to the prevailing user reactivity state (among others), as different user reactivity states call for different positions of the flexible display unit 230.

When the prevailing context class and the prevailing user reactivity state have been determined, an associated position of the flexible display unit 230 is determined by means of the control unit 220. In some examples, determining the associated position is performed based on a mapping between context classes, user reactivity states and possible positions of the flexible display unit 230, which is stored in a storage device of the flexible display system 210. The control unit 220 then generates a control signal corresponding to the determined associated position of the flexible display unit 230 and outputs the control signal towards the actuator 234. The actuator 234 will adjust the position of the flexible display unit 230 in accordance with the control signal.

Normally, some or all of the context data items received by the control unit 220 are ambivalent with respect to a prevailing context class in that a singular context data item can be indicative of various contexts. In such cases, the combined analysis of multiple context data items often enables disambiguating the context data items to a reduced range of potential contexts. Furthermore, different contexts which call for different positions of the flexible display unit 230 may coexist. In some implementations, for determining the prevailing context class among a plurality of contexts indicated by the plurality of context data items, the plurality of context data items is multiplied with respective sets of weighing factors associated with each context class. Such weighing of the context data items is performed, in some examples, for every context class indicated by at least one of the context data items. In some examples, a context class score is determined for each context class based on the respectively weighed context data items. The prevailing context class is then determined among the one or more context classes, for example, according to the context class having the greatest context class score.

Similarly, in some examples, the prevailing user reactivity state to the prevailing context class is determined by weighing the plurality of context data items in accordance with respective sets of user reactivity state weighing factors which are associated with each of multiple user reactivity states under the constraint of the prevailing context class. In some examples, such weighing is performed for each of a plurality of potential user reactivity states indicated by at least one of the context data items. Moreover, in some examples, for each of the weighed plurality of context data items for each of the plurality of user reactivity states, a user reactivity state score is determined based on the weighed context data items. In some examples, the user reactivity state having the greatest user reactivity score among the plurality of user reactivity states is determined as the prevailing user reactivity state.

The plurality of user reactivity states comprises, in some examples, at least one of distraction, disturbance, neediness and/or default. A prevailing user reactivity states corresponding to distraction indicates in some examples a prevailing likelihood that the user, for example, the driver, will feel distracted by the content provided for output via the flexible display unit 210. Accordingly, the position of the flexible display unit associated with that prevailing user reactivity state, i.e., distraction, under the constraint of the given prevailing context, corresponds in some examples with a position of the flexible display unit 230 that is not maximally facing the user. In another example, a prevailing user reactivity state corresponding to disturbance indicates in some examples a prevailing likelihood that the user, for example, a passenger, will feel disturbed by visual content provided by the flexible display unit 230. Accordingly, a position of the flexible display unit 230 associated with disturbance, under the constraint of the given prevailing context, corresponds in some examples with a position of the flexible display unit 230 that is at least partially averted from the user. In yet another example, a prevailing user reactivity state corresponding to neediness indicates in some examples a prevailing likelihood that the user, for example, the driver, has an increased need to easily interact with the flexible display unit 230. Accordingly, the position of the flexible display unit 230 associated with neediness corresponds in some examples with a position of the flexible display unit 230 that is facing the driver by more than a default extent for the given prevailing context.

Fig. 3 shows schematically and exemplarily a control unit 300 for a flexible display system. The control unit 300 comprises a processing unit 310 which is operatively connected to a memory device 320. Furthermore, the control unit 300 is configured to receive and/or output data signals via one or more interfaces, as schematically indicated in Fig. 3.

The memory device 320 stores program code which is executable by means of the processing unit 310. The control unit 300 is implementable by way of an on-board control unit, such as the control unit 220 of the vehicle system 202 in Fig. 2. In other examples, the control unit 300 is implemented at least partially at one or more network nodes which are in network communication with an on-board vehicle system to receive data from the vehicle system and or output and transmit generated data towards the vehicle system via a communication network.

The memory device 320 stores program code which, when executed by means of the processing unit 310, configure the control unit 300 to perform a method as previously described. In particular, the memory device 320 stores program code which in combination with the processing unit 310 constitute a context data items receiving module 322 for receiving context data items indicative of one or more of a plurality of context classes associated with the flexible display system. The memory device 320 further stores program code corresponding to a prevailing context class determining module 324 for determining, based at least partially on the received context data items, a prevailing context class among the plurality of context classes, a prevailing user reactivity state determining module 326 for determining, based at least partially on the prevailing context class and the plurality of context data items, a prevailing user reactivity state to the prevailing context class, and an associated position determining module 328 for determining, based on the prevailing context class and the prevailing user reactivity state, an associated position of at least one flexible display unit of the flexible display system. The memory device 320 further stores program code corresponding to a control signal generating module 330 for generating, based on the associated position and for output towards the at least one flexible display unit, a control signal configured for controlling a variable position of the flexible display unit in accordance with the associated position.

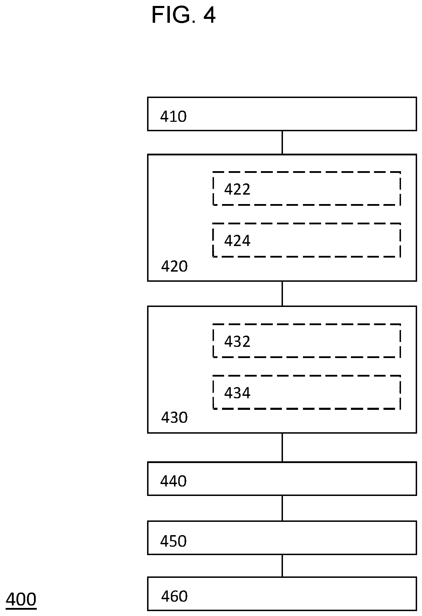

Fig. 4 shows a flow diagram of a method 400 of operating a flexible display system according to another example. Unless otherwise clear from the drawings and the following description, the steps 410, 420, 430, 440 and 450 of the method 400 essentially correspond to the steps 110, 120, 130, 140 and 150 of the method 100 as described in connection with Figs. 1 and Fig. 2.

In the method 400, determining the prevailing context class among the plurality of context classes, step 420, comprises, for each of the one or more context classes, weighing the plurality of context data items in accordance with a set of context class weighing factors associated with the respective context class and determining a context class score of the context class based on the weight context data items, sub step 422. The context class having the greatest context class score among the one or more context classes is determined as being the prevailing context class, step 424.

Furthermore, in the method 400, determining the prevailing user reactivity state to the prevailing context class, step 430, comprises, for each of the plurality of user reactivity states, weighing the plurality of context data items in accordance with a set of user reactivity state weighing factors associated with respective user reactivity state and the prevailing context class as well as determining the user reactivity states goal of the user reactivity state based on the way context data items, step 432. The user reactivity state having the greatest user reactivity states goal among the plurality of user reactivity states is determined as being the prevailing user reactivity state, step 434.

When you control signal for controlling the position of the flexible display unit in accordance with a determined associated position has been generated, step 450, the method 400 further comprises outputting the control signal towards at least one actuator of the flexible display system, step 460.

## Claims

1. Method (100; 400) of operating a flexible display system (210), in particular for use in a vehicle (200), the method (100; 400) comprising:
receiving (110; 410) a plurality of context data items, wherein each of at least a subgroup of the context data items is indicative of one or more of a plurality of context classes of the flexible display system (210);
determining (120; 420), based at least partially on the plurality of context data items, a prevailing context class among the plurality of context classes;
determining (130; 430), based at least partially on the prevailing context class and the plurality of context data items, a prevailing user reactivity state to the prevailing context class,
determining (140; 440), based on the prevailing context class and the prevailing user reactivity state, an associated position of at least one flexible display unit (230) of the flexible display system (210), and
generating (150; 450), based on the determined associated position and for output towards the at least one flexible display unit (230), a control signal configured for controlling a variable position of the flexible display unit (230) in accordance with the determined associated position.

2. Method according to claim 1, wherein determining (420) the prevailing context class comprises:
for each of the one or more context classes, weighing (422) the plurality of context data items in accordance with a set of context class weighing factors associated with the respective context class and determining a context class score of the context class based on the weighed context data items, and
determining (424), among the one or more context classes, a context class having the greatest context class score as being the prevailing context class.

3. Method according to claim 1 or claim 2, wherein the plurality of context data items comprises one or more sensor data items, one or more system parameter data items, one or more media information data items and/or one or more user settings data items.

4. Method according to any one of the preceding claims, wherein the plurality of context classes includes a plurality of drive modes, a plurality of occupancy modes, a plurality of weather modes, a plurality of time modes, a plurality of traffic modes and/or a plurality of driver assistance modes.

5. Method according to any one of the preceding claims, wherein determining (430) the prevailing user reactivity state to the prevailing context class comprises:
for each of a plurality of user reactivity states, weighing (432) the plurality of context data items in accordance with a set of user reactivity state weighing factors associated with the respective user reactivity state and the prevailing context class and determining a user reactivity state score of the user reactivity state based on the weighed context data items, and
determining (434), among the plurality of user reactivity states, a user reactivity state having the greatest user reactivity state score as being the prevailing user reactivity state.

6. Method according to any one of the preceding claims, wherein, for any of the plurality of context classes, the prevailing user reactivity state is determined (130; 430) among a plurality of user reactivity states comprising at least one of distraction, disturbance, neediness and/or default.

7. Method according to claim 6, wherein:
a position of the flexible display unit (230) associated with distraction and/or disturbance as the prevailing user reactivity state corresponds to an averted position of the flexible display unit (230) with respect to a user (D, P), and/or
a position of the flexible display unit (230) associated with neediness as the prevailing user reactivity state corresponds to a facing position of the flexible display unit (230) with respect to the user (D, P), and/or
a position of the flexible display unit (230) associated with default as the prevailing user reactivity state corresponds to an intermediate position between an averted and a facing position of the flexible display unit (230) with respect to the user (D, P).

8. Method according to claim 6 or claim 7, wherein disturbance as the prevailing user reactivity state is determined (130; 430) based at least partially on determining that the plurality of context data items indicate that the user (D, P) is asleep.

9. Method according to any one of the preceding claims, wherein the prevailing user reactivity state is determined (130; 430) based at least partially on a content selected for output via the flexible display unit (230) and/or a control input functionality selected for being provided at the flexible display unit (230) and adapted for receiving user control input via the flexible display unit (230).

10. Method according to any one of the preceding claims, wherein the variable position of the flexible display unit (230) comprises at least one of a variable orientation and a variable shape of a flexible display panel (232) of the flexible display unit (230).

11. Method according to any one of the preceding claims, wherein the method is performed by means of a control unit (220; 300) of the flexible display system (210).

12. Method according to claim 11, wherein the flexible display system (210) is configured to provide a graphical user interface of a vehicle system (202) of a vehicle (200), wherein:
the plurality of context data items comprise one or more sensor data items received from one or more sensor devices (240) of the vehicle system (202), one or more system parameter data items corresponding to one or more system parameters of the vehicle system (202), one or more media information data items received from a media system of the vehicle system (202) and/or one or more user settings data items received from a user settings managing module of the vehicle system (202),
the flexible display unit (230) is arranged to provide a graphical user interface for use by a driver (D) and at least one passenger (P) of the vehicle (200), and/or
the variable position of the flexible display unit (230) comprises a variable orientation and a variable shape of a flexible display panel (232) of the flexible display unit (230), wherein the orientation and the shape of the flexible display panel (232) are variable at least between a facing position of at least a portion of the flexible display panel (232) with respect to a driver (D) or a passenger (P) of the vehicle (200) and an averted position of at least a portion of the flexible display panel (232) with respect to the driver (D) or the passenger (P) of the vehicle (200).

13. Control unit (220; 300) for a flexible display system (210), the control unit (220; 300) comprising a processing unit (310) and a storage device (320) operatively connected to the processing unit (310) and storing portions of program code which, when executed by means of the processing unit (310), cause the control unit (300) to perform the method according to any one of claims 1 to 12.

14. Flexible display system (210), in particular for use in a vehicle (200), comprising:
a control unit (220; 300) according to claim 13, and
at least one flexible display unit (230), wherein a position of the flexible display unit (230) is controllable by means of a control signal output by means of the control unit (220; 300) towards the flexible display unit (230).

15. Vehicle (200) comprising a flexible display system according to claim 14.
